# EUROPEAN PATENT APPLICATION

(11) **EP 1 837 864 A1**
(43) Date of publication of application: **26.09.2007**
(21) Application number: 07075204.3
(22) Date of filing: 16.03.2007
(51) Int. Cl.: G10L 15/26, G10L 15/28

(54) **Multi-context voice recognition system for long item list searches**

(30) Priority: 21.03.2006 US 385279
(71) Applicant: Delphi Technologies, Inc., Troy, Michigan 48007 (US)
(72) Inventor: Kady, Mark A., Greentown, IN 46936 (US); Puranik, Nishikant N., Kokomo, IN 46902 (US)
(74) Representative: Denton, Michael John

(57) **Abstract**

A multi-context speech recognition system includes a device for providing phrase based speech recognition and keyword based speech recognition from a single user utterance. A first speech recognition engine coupled to a phrase based dictionary is used for searching out matches between the utterance and one or more entries in the phrase based dictionary. A second speech engine is coupled to a keyword based dictionary for searching out matches between the utterance and one or more entries found in a keyword based dictionary.

## Description

### Technical Field

This invention generally relates to voice recognition systems, and more particularly relates to voice recognition systems used to retrieve items from long lists of items.

### Background of the Invention

Current voice recognition systems require a user to enter the entire name of an item before it can be identified within a collection or list of items. In the case of music players, a user would need to recite the entire name of an album or song title before the album or song title could be properly located. For example, in order to play songs from the album "Hotel California," the user is required to recite "Hotel California." If the user recites only a portion of the title (e.g., "Hotel" or "California"), many speech engines will not return "Hotel California" but will typically return a homonym of "Hotel California" (e.g., "Go Tell" for "Hotel"). By requiring the user to state, in exact terms, the selection title, unnecessary rigidity is introduced into the selection process, thereby rendering the voice recognition tools inconvenient for the user to use and master. The problem becomes particularly acute as databases grow larger and larger inasmuch as the user must be able to recall with specificity, a significant number of titles (potentially thousands).

Some attempts have been made to overcome the above-referenced problem by phonically transcribing each word found within a phrase. For example, in the above-referenced example, the words "Hotel" and "California" would be combined in context with one another and the speech engine would come back with the result "Hotel" + "California." This solution at first, seems to be ideal; however, with large lists comprising several thousand songs, the recognition rate drops significantly because searching for an entire phrase using individual word recognition on average, may require three to four times more entries (one entry for each word in a title) than searching for a match to a complete phrase or full title search.

It is therefore desirable to provide for a flexible speech recognition system that recognizes either full phrases or partial words from long lists of items in a manner that is easy to use.

### Summary of the Invention

The present invention solves or minimizes the problem associated with multi-context voice recognition search of long lists by conducting simultaneous, multiple dictionary searches. To achieve this and other advantages, in accordance with the purpose of the present invention as embodied and described herein, one aspect of the present invention provides for a speech recognition system having an audio input device for accepting a phrase based, search request. The system has a first speech engine coupled to a phrase based dictionary for searching out matches between the phrase based, search request and one or more entries in the phrase based dictionary. The system further includes a second speech engine coupled to a keyword based dictionary for searching out matches between one or more component words of the phrase based, search request and the one or more entries in the keyword based dictionary.

According to another aspect of the present invention, a method of searching lists of items is provided. The method includes the steps of receiving a spoken request from a user, and passing the spoken request to first and second speech engines. The first speech engine is loaded with a phrase based dictionary, and the second speech engine is loaded with a keyword based dictionary created by parsing keywords from the phrase based dictionary. The method also includes the step of comparing the spoken request with entries contained in the phrase based dictionary. The method further includes a step of comparing the spoken request with entries contained in the keyword based dictionary. The method further generates one or more speech recognition matches based on the steps of comparing.

In one embodiment, the present invention solves the problem associated with finding an entry from a long list of items. One embodiment of the present system allows a user to articulate a complete name or, in the alternative, to conduct a search on one or more words from a complete name.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a schematic/block diagram of a speech recognition system according to an embodiment of the present invention; and
FIG. 2 is a flowchart illustrating an embodiment of the methodology of the present invention.

### Description of the Preferred Embodiment

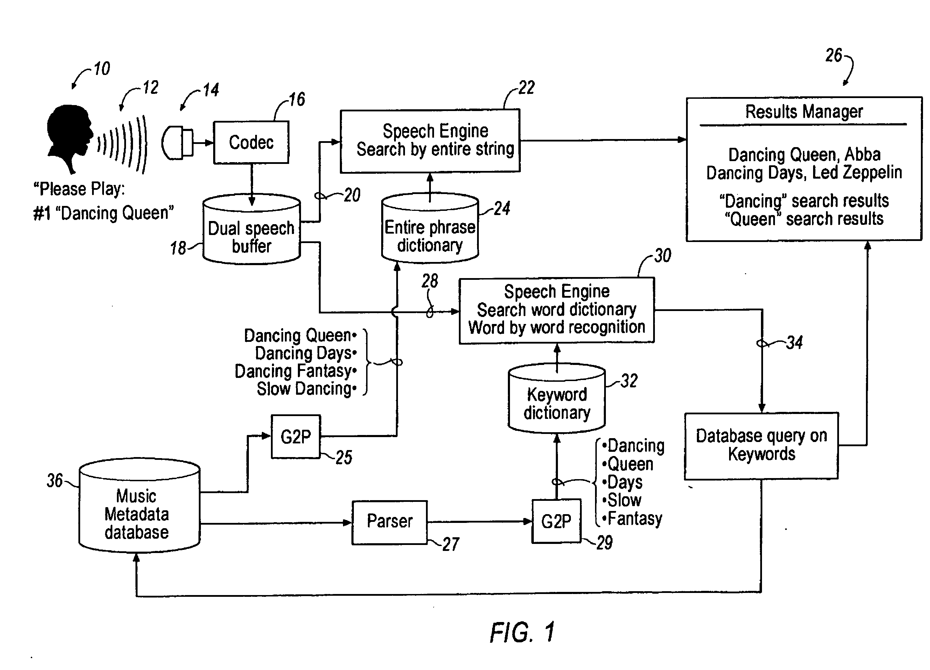

Now referring to FIG. 1, a system for conducting simultaneous multiple speech recognition requests is shown according to one embodiment of the present invention. The system permits the user 10 to state either the complete name of the item to be searched or to state one or more words from an item to be searched. An item can be any word, multiple words, or entire phrase to be searched including, but not limited to, artist name, song name, album name, etc.

Once the user 10 has audibly placed a request (e.g., "Dancing Queen"), the audible request 12 is captured by an audio transducer (e.g., a microphone) 14. The audio signal captured by audio transducer 14 is converted into an electrical signal that is then processed by an analog-to-digital (A/D) conversion system (e.g., a codec device) 16 which converts an audio signal into voice data. The voice data is transferred to a dual speech buffer 18, which may be contained within the voice (speech) recognition engines or reside as a separate entity outside the voice recognition engines. Dual speech buffer 18 creates a voice data stream which represents the entire string as dictated by user 10. This voice data is passed to a first speech engine 22 along data path 20. Speech engine 22 searches the entire string passed to it by dual speech buffer 18 by comparing the text of the entire string to the entries found in the entire phrase dictionary 24. Because speech engine 22 searches using the exact title/album string, it looks for an exact match within phrase dictionary 24 and by its nature, this process will have greater accuracy than a word-by-word search method. Any matches found by speech engine 22 between the text passed to it along data path 20 and a text entry found in phrase dictionary 24 are sent along to the results manager 26 wherein the results found by search engine 22 are presented to the user for selection.

Entire phrase dictionary 24 is populated by way of information stored in music metadata database 36, according to one embodiment. Music metadata database 36 stores music titles, artists' names, and other metadata associated with songs. Although it is possible to store the actual song information on the metadata database 36, in most applications it is preferable to store the actual song content in compressed format (e.g., MP3 files) in a separate database. This database can be on the same media used to store the music metadata database 36 or it can be on a separate storage device (i.e. SD card, etc.). Every time that a new song is offered to the user for selection, the metadata for the song is loaded into the metadata database. A "grapheme to phoneme" (G2P) converter 25 accepts the text based information stored in the music metadata database 36 and converts it to phonemes or symbols that are recognized by the speech engine 22.

In addition to dual speech buffer 18 presenting the voice data 20 to speech engine 22 along data path 20, dual speech buffer 18 also presents the voice data 20 to a second speech engine 30 by way of data path 28. Unlike speech engine 22, speech engine 30 attempts to match each word spoken by user 10 to keywords in keyword dictionary 32. In each instance where speech engine 30 successfully matches a word or multiple words sent from dual speech buffer 18 against an entry found in keyword dictionary 32, a request is issued by speech engine 30 along data path 34 to retrieve all entries within the music metadata database that contain the words matched by speech engine 30. The entries retrieved from metadata database 36 are sent to results manager 26 where they are displayed to the user for final selection by the user.

A parser 27 parses the individual words stored in music metadata databases 36 and presents them to the G2P converter 29. In the embodiment shown and described herein, the parser 27 is typically a software program that separates (or "parses") the individual words from a song title. In some embodiments, not every word from a song title is kept. For example, key words may be retained from a song title but other, nonessential words (such as "the," "and," "or," "but," etc.) can be eliminated. "Grapheme to phoneme" (G2P) converter 29 forms the same function as that already discussed in conjunction with G2P converter 25. Alternatively, the parser 27 and G2P converter 29 process (or phonetic transcription process), may be preprocessed to create the dictionaries.

In one embodiment, first speech engine 22 and second speech engine 30 run concurrently on separate software threads but at generally similar thread priorities. Under this arrangement, the first search engine 22 will generally complete its search task ahead of the second search engine 30 because the context in which search engine 22 must search is narrower in scope than the context in which search engine 30 must search (i.e. a word-by-word search is, by definition, going to take longer than a phrase based search provided search engines 22 and 30 are processed at the same speed). In another embodiment, first speech engine 22 could execute first and then after completing the voice recognition, second speech engine 30 could execute (sequential recognition). This embodiment does not take advantage of parallel processing which may result in a longer overall recognition time, however, it would save memory since only one system is running at a time.

A HMI (Human Machine Interface) can be used to dynamically populate the list compiled by the results manager 26. Shortly thereafter, the word-by-word search engine 30 will return a word-by-word search. If user 10 recites an entire item (e.g., entire song title), speech engine 22 will return accurate results quickly. If user 10 states less than all of the words used in the entire title, speech engine 30 will return the results after a more extended period of time. Results manager 26 will display the search results to the user 10 from both the "exact match" found by speech engine 22 and also the "word-by-word" matches found by speech engine 30. In one embodiment, the search results can be listed and sorted using any number of sorting schemes including alphabetically or by confidence level as determined by speech engines 22 and 30.

The various components of the speech recognition system may be executed on one or more microprocessors and memory, as should be apparent to those skilled in the art. The speech engines 22 and 30 may be implemented as software stored in memory and processed by one or more microprocessors. The first and second speech engines 22 and 30 may be implemented in software having different objects or different instances of the same object for performing the phrase and keyword searches. The entire phrase dictionary 24, keyword dictionary 32, and music metadata database 36 may be located in memory that is readable by the microprocessor(s). The memory may include random access memory (RAM), read-only memory (ROM), electronically erasable programmable read only memory (EEPROM), flash memory, and other memory medium. The dual speech buffer 18 may be likewise implemented in memory. It should be appreciated that the various components of the speech recognition system may otherwise be implemented with analog and/or digital circuitry, without departing from the teachings of the present invention.

In view of the above description, it has been demonstrated that the speech recognition system and method of the present invention allows a user to audibly state an item and effectively uses the information spoken by the user to provide the best matches for the item (i.e. album/song/title) that are currently found in a reference database.

Although the present invention has been primarily discussed in the context of retrieving album titles/artist titles, and song titles from a resident database according to an exemplary embodiment, it is also contemplated that the search methodology set forth herein is equally beneficial for use in any system which requires a user to select one or more items from a long list of stored items (such as road names and the like).

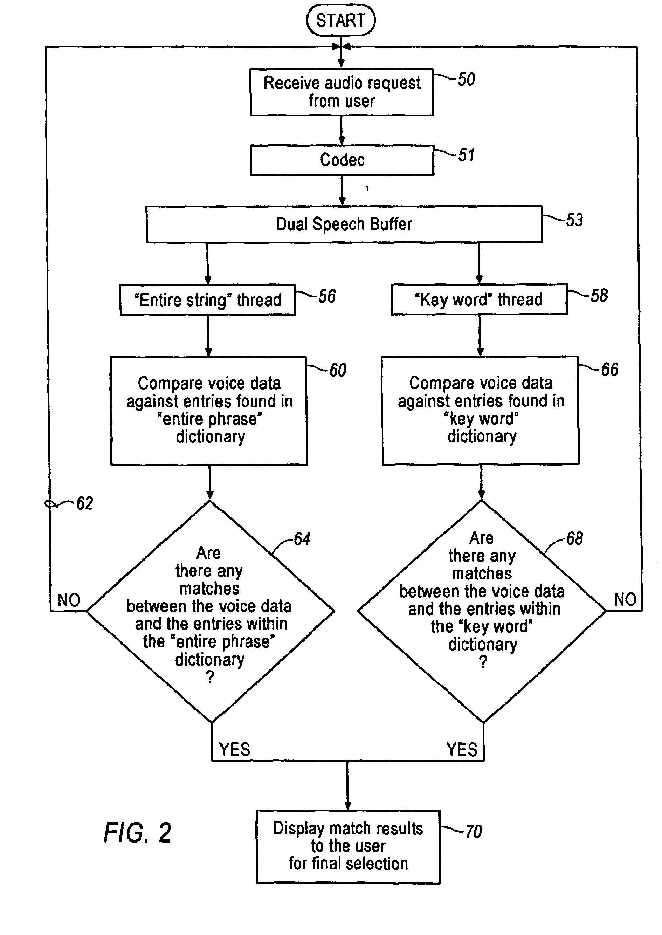

Now referring to FIG. 2, in one embodiment of the method of the present invention, an audio request in the form of spoken word(s) is received from a user in step 50. After the audio request is received from the user, the audio request is digitized in codec step 51 into voice data. The voice data is transferred to a dual speech buffer in step 53 which sends the voice data to both the "entire string" thread in step 56 and to the "keyword" thread in step 58. In the entire string thread step 56, the voice data is examined by the entire string speech engine 22 wherein it is compared in step 60 against entries found in an "entire phrase" dictionary 24. If there are not any matches found between the "single string" text and the entries within the "entire phrase" dictionary 24 as determined in step 64, control is passed in step 62 to the beginning of the method process (i.e. method step 50). If matches are found in step 64 between the "single string" text and the entries within "entire phrase" dictionary, control is passed to results manager 26 wherein match results are displayed to the user for final selection in step 70.

In the "keyword" thread step 58, each component word contained within the voice data is compared in step 66 against entries in a "keyword" dictionary 32. If any matches are found in step 68 between the component words from the "entire string" text and the word entries found within the "keyword" dictionary 32, these matches are then sent to a database to search for items containing either any or all of the keywords returned by the speech engine 30. Different types of queries can be sent to the database to search on the keywords returned by the speech engine 30. The items retrieved from the database are then displayed to the user for final selection in step 70. If no matches above a certain confidence are found between the component words from the "parsed string" text and the entries within the "keyword" dictionaries, control is passed back to the beginning of the method at step 50.

Accordingly, the speech recognition system and method of the present invention advantageously solves or minimizes the problem associated with the searching of an item from long item lists conducting simultaneous, multiple dictionary searches. The invention may allow for a user to articulate a complete name or, in the alternative, to conduct a search on one or more words from a complete name.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A speech recognition system, comprising:
an audio input device for accepting a phrase based, search request;
a first speech engine coupled to a phrase based dictionary for searching out matches between said phrase based, search request and one or more entries in the phrase based dictionary; and
a second speech engine coupled to a keyword based dictionary for searching out matches between one or more component words of said phrase based, search request and one or more entries in the keyword based dictionary.

2. The speech recognition system of claim 1, wherein said audio input device for accepting a first, phrase based, search request comprises an audio transducer coupled to a codec device.

3. The speech recognition system of claim 1, wherein said audio input device comprises a dual speech buffer for storing the audio input search request.

4. The speech recognition system of claim 1, wherein said phrase based dictionary is compiled from a metadata database.

5. The speech recognition system of claim 1, wherein said keyword based dictionary is compiled from a metadata database.

6. The speech recognition system of claim 1, wherein said keyword based dictionary is created by parsing one or more component words that make up said phrase based, search request.

7. The speech recognition system of claim 1, wherein said matches searched out by said first and second search engines are displayed to the user by a results manager.

8. The speech recognition system of claim 7, wherein the results manager is adapted to display said matches in an order relating to confidence level of the first and second speech engines.

9. A speech recognition system, comprising:
an audio input device for accepting a phrase based, search request;
a phrase based dictionary comprising text phrase entries;
a keyword based dictionary comprising text keyword entries;
a first speech engine coupled to the phrase based dictionary for searching out matches between said phrase based, search request and one or more entries in the phrase based dictionary; and
a second speech engine coupled to the keyword based dictionary for searching out matches between one or more component words of said phrase based, search request and one or more entries in the keyword based dictionary.

10. The speech recognition system of claim 9, wherein said audio input device for accepting a first, phrase based, search request comprises an audio transducer coupled to a codec device.

11. The speech recognition system of claim 9, wherein said system further comprises a dual speech buffer for storing the audio input search request.

12. The speech recognition system of claim 9, wherein said phrase based dictionary is compiled from a metadata database.

13. The speech recognition system of claim 9, wherein said keyword based dictionary is compiled from a metadata database.

14. The speech recognition system of claim 9, wherein said keyword based, dictionary is created by parsing one or more component words that make up said phrase based dictionary.

15. The speech recognition system of claim 9, wherein said matches searched out by said first and second search engines are displayed to the user by a results manager.

16. The speech recognition system of claim 15, wherein the results manager is adapted to display said matches in an order relating to confidence level as determined by the first and second speech engines.

17. A method of searching lists of items, comprising the steps of:
receiving a spoken request from a user;
passing the spoken request to first and second speech engines, wherein the first speech engine is loaded with a phrase based dictionary, and the second speech engine is loaded with a keyword based dictionary created by parsing keywords from the phrase based dictionary;
comparing the spoken request with entries contained in the phrase based dictionary;
comparing the spoken request with keyword entries contained in the keyword based dictionary; and
generating one or more speech recognition matches based on the steps of comparing.

18. The method of claim 17, wherein said step of receiving a user spoken request comprises receiving an audio request from the user.

19. The method of claim 17 further comprising the step of storing the user spoken request in a dual speech buffer.

20. The method of claim 17 further comprising the step of:
displaying one or more single string requests and parsed string requests to the user.

21. The method of claim 17 further comprising the step of sorting the one or more matches.

22. The method of claim 21, wherein the step of sorting comprises sorting the one or more matches based on confidence level.
